# FASCICULE DE BREVET EUROPEEN

(11) **EP 2 373 481 B1**
(45) Date de publication et mention de la délivrance du brevet: **22.10.2014**
(21) Numéro de dépôt: 09803844.1
(22) Date de dépôt: 11.12.2009
(51) Int. Cl.: B29D 30/24

(54) **ELEMENT MODIFIABLE DE MISE EN FORME D'UNE EBAUCHE CRUE DE PNEUMATIQUE**
MODIFIZIERBARES ELEMENT ZUM FORMEN EINES REIFENROHLINGS
MODIFIABLE ELEMENT FOR SHAPING A RAW TYRE BLANK

(30) Priorité: 16.12.2008 FR 0858654
(43) Date de publication de la demande: 12.10.2011
(73) Titulaire: COMPAGNIE GENERALE DES ETABLISSEMENTS MICHELIN, 63000 Clermont-Ferrand (FR); MICHELIN Recherche et Technique S.A., 1763 Granges-Paccot (CH)
(72) Inventeur: LIPSA, Andrei, F-63200 Riom (FR)
(74) Mandataire: Noel, Luminita
(86) Numéro de dépôt international: PCT/FR2009/052501
(87) Numéro de publication internationale: WO 2010/076462

(56) Documents cités:
- GB-A- 2 223 988
- JP-A- 2007 185 888
- US-A- 1 577 664
- US-A- 3 607 558
- US-A1- 2007 095 481

## Description

La présente invention concerne le domaine technique des pneumatiques.

Dans ce qui suit, on appelle axe d'une ébauche crue son axe de révolution. Cet axe définit une direction axiale de l'ébauche et du dispositif de mise en forme de l'ébauche en considérant l'ébauche positionnée sur le dispositif.

Une ébauche crue de pneumatique est généralement formée par une carcasse sur laquelle est positionné un ensemble sommet destiné à former la bande de roulement. La carcasse et l'ensemble sommet sont formés par des profilés en caoutchouc non vulcanisé comprenant, pour certains, des fils de renfort.

Lors de la vulcanisation de l'ébauche dans un moule, on observe une variation du positionnement relatif entre la carcasse et l'ensemble sommet. La position finale relative de la carcasse et de l'ensemble sommet est imposée par le moule, et donc connue. La variation du positionnement relatif permet de modifier certaines caractéristiques géométriques du pneumatique vulcanisé. Ainsi, ces caractéristiques géométriques peuvent être contrôlées en modifiant la position initiale relative de la carcasse et de l'ensemble sommet, la position relative finale et la variation du positionnement relatif étant également connus.

L'ébauche de l'ensemble sommet du pneumatique comprend les nappes de renfort sommet formées de fils de renfort enrobés dans du caoutchouc, parallèles entre eux et faisant un angle donné avec la direction circonférentielle du pneumatique, la bande de roulement, ainsi qu'un certain nombre de profilés en caoutchouc destinés à assurer le renforcement des extrémités axiales des nappes de renfort.

L'ébauche crue de l'ensemble sommet est formée sur un dispositif de mise en forme de l'ébauche. Ce dispositif comprend une pluralité d'éléments pour la mise en forme d'une portion circonférentielle de l'ébauche du sommet du pneumatique. Chaque élément comprend une surface d'appui radial sur une portion circonférentielle de la surface radialement interne de la l'ébauche. Chaque surface d'appui est portée par un support de positionnement de l'élément par rapport à l'ébauche.

Le document JP 2007185888 - A divulgue un tambour pour la mise en forme d'une portion circonférentielle d'une ébauche crue de pneumatique sensiblement de révolution autour d'un axe principal, comprenant une surface d'appui radial sur une portion circonférentielle d'une surface radialement interne de l'ébauche, le tambour étant agencé de sorte que le profil radial de la surface d'appui est modifiable.

Afin de modifier la position initiale relative et donc les caractéristiques géométriques du pneumatique, la surface d'appui du dispositif présente dans un plan radial, pour des caractéristiques géométriques données, un profil donné qui détermine la position initiale relative. Afin d'obtenir une grande diversité de caractéristiques géométriques, il est nécessaire de disposer d'une grande diversité de profils des surfaces d'appui des éléments du dispositif.

Or, le changement des éléments pour la fabrication de différents types de pneumatiques présentant des caractéristiques géométriques différentes est fastidieux. De plus, ces éléments sont relativement onéreux.

L'invention a pour but de fournir un dispositif permettant d'obtenir facilement différents types de pneumatiques présentant des caractéristiques géométriques différentes.

A cet effet, l'invention a pour objet un élément comme défini dans la revendication 1, pour la mise en forme d'une portion circonférentielle d'une ébauche crue de pneumatique sensiblement de révolution autour d'un axe principal, comprenant une surface d'appui radial sur une portion circonférentielle d'une surface radialement interne de l'ébauche, l'élément étant agencé de sorte que le profil radial de la surface d'appui est modifiable et comprenant:
- un support et plusieurs organes mobiles radialement, par rapport au support, indépendamment les uns par rapport aux autres et juxtaposés axialement, chaque organe mobile portant une surface d'appui partielle, l'ensemble des surfaces d'appui partielles formant la surface d'appui de l'élément, et
- des moyens de positionnement radial des organes par rapport au support comprenant une cale destinée à être intercalée entre une surface de base du support et des surfaces de sollicitation des organes mobiles, le profil radial de la cale définissant le profil radial de la surface d'appui de l'élément. Des formes préférentielles de l'invention sont définies dans les revendications dépendantes.

L'élément selon l'invention permet d'obtenir une grande diversité de pneumatiques présentant des caractéristiques géométriques différentes. En effet, le profil radial de la surface d'appui étant modifiable, ce dernier peut être modifié à volonté. Ainsi, la position initiale relative de la carcasse et de l'élément sommet est facilement modifiable, notamment par déplacement radial de la surface d'appui, en fonction des caractéristiques géométriques de performance désirées du pneumatique.

Chaque surface d'appui partielle permet d'imposer à une portion axiale de la portion circonférentielle de l'ébauche une position initiale relative différente de la position initiale relative d'une autre portion axiale de la portion circonférentielle de l'ébauche. Ainsi, la variation du positionnement relatif peut être modifiée axialement sur la portion circonférentielle de l'ébauche, ce qui permet d'obtenir des propriétés de performances différentes selon la direction axiale.

La cale permet de changer facilement le profil radial de la surface d'appui. En effet, le profil radial de la cale dans le plan radial étant sensiblement analogue au profil radial de la surface d'appui dans ce plan radial, il suffit de prévoir une cale différente pour chaque type de profil radial souhaité. Une telle cale étant facile à fabriquer, différents types de pneumatiques présentant différentes caractéristiques géométriques peuvent être facilement obtenus en utilisant un même support et en changeant uniquement la cale.

Selon une caractéristique optionnelle de l'élément selon l'invention, la surface de base s'étend axialement, et chaque surface de sollicitation est opposée à la surface d'appui partielle et est en regard de la surface de base, la distance entre la surface de base et la surface de sollicitation de chaque organe mobile étant variable en fonction de la position radiale de l'organe mobile par rapport au support.

Selon d'autres caractéristiques optionnelles de l'élément selon l'invention :
- Le support comprend des moyens de guidage axial de la cale comprenant une glissière femelle dans laquelle, la cale formant une glissière mâle est apte à être montée coulissante.
- L'élément comprend des moyens de guidage radial de chaque organe mobile par rapport au support.
- L'élément comprend des moyens de limitation de la course radiale de chaque organe mobile.
- L'élément comprend des moyens de rappel élastique de chaque organe mobile.

L'invention a également pour objet un dispositif pour la mise en forme d'une ébauche crue de pneumatique, le dispositif étant sensiblement de révolution autour d'un axe principal, comprenant plusieurs éléments tels que décrits ci-dessus répartis circonférentiellement autour de l'axe principal.

L'invention sera mieux comprise à la lecture de la description qui va suivre, donnée uniquement à titre d'exemple non limitatif et faite en se référant aux dessins dans lesquels:
- la figure 1 est une vue en perspective d'un dispositif selon l'invention pour la mise en forme d'une ébauche crue de pneumatique ;
- la figure 2 est une vue en perspective d'un élément selon l'invention pour la mise en forme d'une portion circonférentielle d'une ébauche crue de pneumatique ;
- la figure 3 est une vue en coupe de l'élément de la figure 2 ;
- la figure 4 est une vue en perspective d'une cale de l'élément de la figure 2 ;
- la figure 5 est une vue en coupe d'un organe mobile de l'élément de la figure 2 dans une position de repos ;
- la figure 6 est une vue en coupe de l'organe de la figure 2 dans une position de sollicitation.

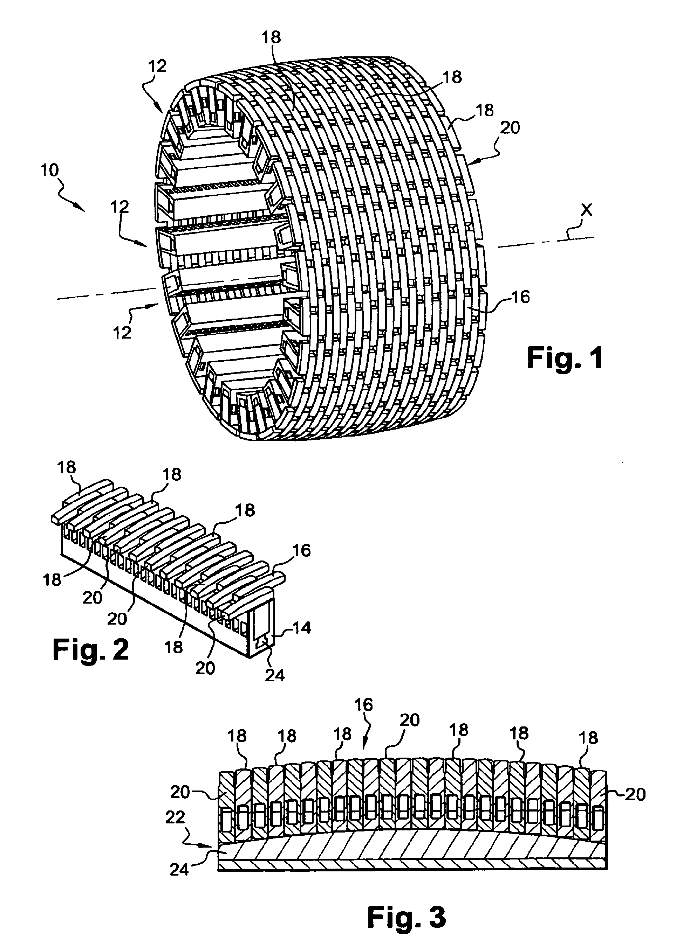

On a représenté sur la figure 1 un dispositif selon l'invention désigné par la référence générale 10.

Le dispositif 10 permet la mise en forme d'une ébauche crue de pneumatique. Une telle ébauche (non représentée) présente une forme générale de révolution autour d'un axe principal de l'ébauche. Le dispositif 10 a une forme générale de révolution autour d'un axe principal X. Une fois l'ébauche positionnée sur le dispositif 10, l'axe principal X du dispositif 10 coïncide sensiblement avec l'axe principal de l'ébauche.

Le dispositif 10 comprend une pluralité d'éléments 12 pour la mise en forme de portions circonférentielles de l'ébauche crue. En l'espèce, le dispositif 10 représenté à la figure 1 comprend vingt-quatre éléments 12 répartis circonférentiellement autour de l'axe principal X.

Tous les éléments 12 étant tous identiques, nous allons maintenant décrire un seul élément 12 en référence aux figures 2 à 6.

L'élément 12 comprend un bâti 14 formant support de positionnement de l'élément 12 par rapport à l'ébauche. Le support 14 est relié à des moyens de déplacement (non représentés) radial de l'élément permettant d'ajuster la position de l'élément 12 par rapport à l'ébauche. Ces moyens de déplacement comprennent des actionneurs du type pneumatique ou électrique.

L'élément 12 comprend également une surface 16 d'appui radial sur une portion circonférentielle d'une surface radialement interne correspondante de l'ébauche. La surface 16 est portée par le support 14 et comprend plusieurs portions 18 axiales, dites surfaces d'appui partielles. L'ensemble des surfaces d'appui partielles 18 forme la surface d'appui 16 de l'élément 12. L'élément 12 est agencé de sorte que le profil, dans un plan radial, dit radial, de la surface d'appui est modifiable.

L'élément 12 comprend une pluralité d'organes 20 mobiles radialement indépendamment les uns des autres par rapport au support 14. En l'espèce, l'élément 12 illustré par les figures 2 et 3 comprend vingt-quatre organes 20. Les organes 20 sont juxtaposés axialement selon une direction sensiblement parallèle à l'axe X.

La surface d'appui 16 est mobile radialement par rapport au support 14. Dans l'exemple illustré, chaque organe 20 porte une des surfaces d'appui partielles. Les surfaces d'appui partielles 18 sont mobiles radialement indépendamment les unes des autres.

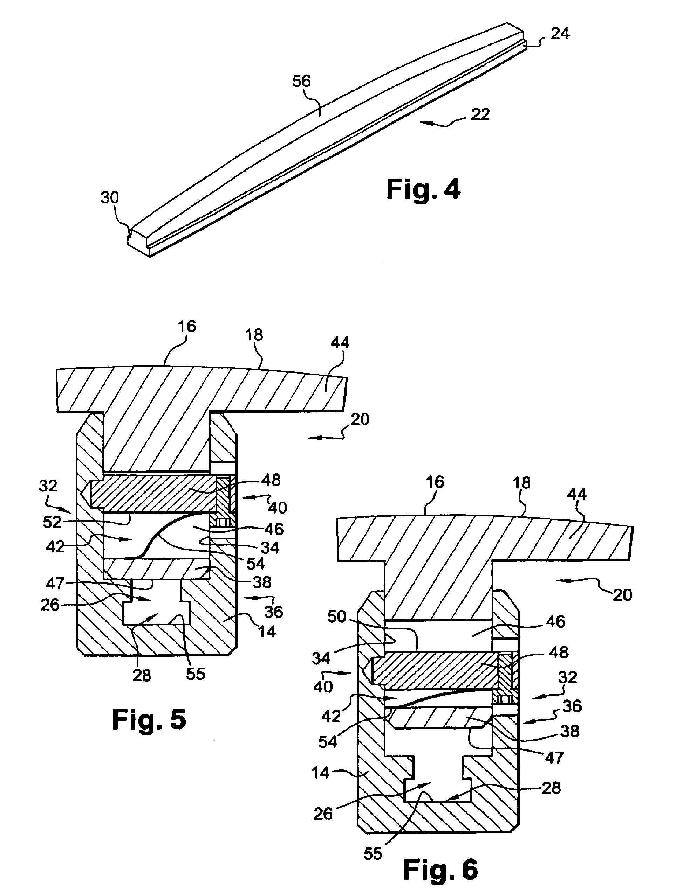

De plus, l'élément 12 comprend des moyens 22 de positionnement radial des organes mobiles 20 par rapport au support 14, en l'espèce une cale 24 représentée isolément sur la figure 4. Le support 14 comprend des moyens 26 de guidage axial de la cale 24. Dans l'exemple représenté, les moyens 26 comprennent une glissière femelle 28 et une glissière mâle 30. La glissière mâle 30 est formée par la cale 24 apte à être montée coulissante dans la glissière femelle 28.

L'élément 12 comprend également des moyens 32 de guidage radial de chaque organe mobile 20 par rapport au support 14. Les moyens 32 comprennent une glissière femelle 34 ménagée dans le support 14 et une glissière mâle 36 formé par un corps 38 de chaque organe 20.

L'élément 12 comprend de plus des moyens 40 de limitation de la course radiale de chaque organe mobile 20 dans le support 14. L'élément 12 comprend enfin des moyens 42 de rappel élastique de chaque organe mobile 20.

Chaque organe 20 comprend une tête 44 solidaire du corps 38. La tête 44 porte la surface d'appui partielle. Chaque organe 20 présente une forme générale en L. Comme visible sur les figures 1 et 2, deux têtes 44 successives de deux organes 20 se succédant axialement sont orientées de façon opposée. Deux têtes 44 analogues de deux éléments 12 se succédant circonférentiellement sont donc orientées dans la même direction circonférentielle de façon que lesdites têtes 44 des deux éléments 12 se succédant circonférentiellement s'emboîtent les unes avec les autres. En outre, le corps 38 comprend un évidemment 46.

Chaque organe 20 comprend également une surface 47 de sollicitation opposée à la surface d'appui partielle 18.

Les moyens 40 de limitation de la course radiale de chaque organe mobile 20 comprennent une butée 48 fixe par rapport au support 14 et positionnée dans l'évidement 46. La butée 48 comporte une surface supérieure 50 de limitation inférieure de la course de chaque organe 20 ainsi qu'une surface inférieure 52 de limitation supérieure de la course de chaque organe 20.

Les moyens 42 de rappel élastique de chaque organe mobile 20 comprennent un ressort 54 fixé au support 14 et sollicité par chaque organe mobile 20. Chaque organe 20 est mobile entre une position de repos, représentée à la figure 5, et une position de sollicitation, représentée à la figure 6, dans laquelle la cale 24 sollicite chaque organe mobile 20.

La glissière femelle 28 est délimitée d'une part, par la surface de sollicitation 47 et d'autre part, par une surface de base 55 en regard de la surface de sollicitation 47. La distance entre la surface de base 55 et la surface de sollicitation 47 est variable en fonction de la position radiale de chaque organe 20 par rapport au support 14. La cale 24 comporte une surface 56 de sollicitation complémentaire de chaque surface de sollicitation 47 de chaque organe mobile 20. Le profil radial de la cale 24 définit le profil radial de la surface d'appui 16. La cale 24 est destinée à être intercalée entre la surface de base 55 et la surface de sollicitation 47 de chaque organe mobile 20. Ainsi, la surface de sollicitation complémentaire 56 présente un profil radial sensiblement analogue à celui de la surface d'appui 16 dans la position de sollicitation. En l'espèce, la surface 56 présente, dans un plan de coupe radial, un profil galbé radialement vers l'extérieur.

L'invention ne se limite pas au mode de réalisation précédemment décrit.

On pourra également prévoir des moyens de verrouillage axial de la cale 24.

Afin de modifier le profil radial de la surface 16 d'appui radial, le dispositif 12 pourra également comprendre des moyens automatiques de changement de la cale 24. Le dispositif pourra ainsi comprendre des moyens de déplacement axial de la cale 24 à changer par déplacement d'une nouvelle cale dans la glissière femelle 28 de sorte que la cale 24 à changer est expulsée de la glissière 28. On pourra ainsi changer la cale de chacun des éléments 12 en faisant tourner le dispositif 12 autour de l'axe principal X d'un angle de 2π/n où n est le nombre d'éléments 12, ici 15°, de façon à aligner successivement les moyens de changement de cale et la glissière femelle 28 de chaque élément 12.

En outre, la surface de sollicitation 56 pourra présenter un profil radial quelconque : plan, galbé radialement vers l'extérieur, galbé radialement vers l'intérieur, etc.

## Revendications

1. Elément (12) pour la mise en forme d'une portion circonférentielle d'une débauche crue de pneumatique sensiblement de révolution autour d'un axe principal (X), comprenant une surface (16) d'appui radial sur une portion circontérentielle d'une surface radialement interne de l'ébauche, l'élément (12) étant agencé de sorte que le profil radial de la surface (16) d'appui est modifiable, **caractérisé en ce que** l'élément comprend
- un support (14) et plusieurs organes (20) mobiles radialement par rapport au support (14) indépendamment les uns par rapport aux autres et juxtaposés axialement, chaque organe mobile (20) portant une surface d'appui partielle (18), l'ensemble des surfaces d'appui partielles (18) formant la surface (16) d'appui de l'élément (12), et
- des moyens (22) de positionnement radial des organes (20) par rapport au support (14) comprenant une cale (24) destinée à être intercalée entre une surface de base (55) du support (14) et des surfaces de sollicitation (47) des organes mobiles (20), le profil radial de la cale (24) définissant le profil radial de la surface d'appui (16) de l'élément (12).

2. Elément (12) selon la revendication précédente, dans lequel la surface de base (55) s'étend axialement et chaque surface de sollicitation (47) est opposée à la surface d'appui partielle (18) et est en regard de la surface de base (55), la distance entre la surface de base (55) et la surface de sollicitation (47) de chaque organe mobile (20) étant variable en fonction de la position radiale de l'organe mobile (20) par rapport au support (14).

3. Elément (12) selon l'une quelconque des revendications précédentes, dans lequel le support (14) comprend des moyens (26) de guidage axial de la cale (24) comprenant une glissière femelle (28) dans laquelle la cale (24) formant une glissière mâle (30) est apte à être montée coulissante.

4. Elément (12) selon l'une quelconque des revendications précédentes, comprenant des moyens (32) de guidage radial de chaque organe mobile (20) par rapport au support (14).

5. Elément (12) selon l'une quelconque des revendications précédentes, comprenant des moyens (40) de limitation de la course radiale de chaque organe mobile (20).

6. Elément (12) selon l'une quelconque des revendications précédentes, comprenant des moyens (42) de rappel élastique de chaque organe mobile (20).

7. Dispositif (10) pour la mise en forme d'une ébauche crue de pneumatique, le dispositif (10) étant sensiblement de révolution autour d'un axe principal (X), **caractérisé en ce qu'**il comprend plusieurs éléments (12) selon l'une quelconque des revendications précédentes répartis circonférentiellement autour de l'axe principal (X).

## Patentansprüche

1. Element (12) für die Formgebung eines Umfangsabschnitts eines Reifenrohlings, der im Wesentlichen rotationssymmetrisch um eine Hauptachse (X) ist, welches eine Fläche (16) zur radialen Abstützung auf einem Umfangsabschnitt einer radial inneren Fläche des Rohlings aufweist, wobei das Element (12) derart angeordnet ist, dass das radiale Profil der Stützfläche (16) modifizierbar ist, **dadurch gekennzeichnet, dass** das Element aufweist:
- einen Träger (14) und mehrere Glieder (20), die unabhängig voneinander radial beweglich bezüglich des Trägers (14) sind und axial nebeneinander angeordnet sind, wobei jedes bewegliche Glied (20) eine Teilstützfläche (18) trägt, wobei die Gesamtheit der Teilstützflächen (18) die Stützfläche (16) des Elements (12) bildet, und
- Mittel (22) zur radialen Positionierung der Glieder (20) bezüglich des Trägers (14), die einen Keil (24) aufweisen, der dazu bestimmt ist, zwischen einer Grundfläche (55) des Trägers (14) und Beaufschlagungsflächen (47) der beweglichen Glieder (20) eingeschoben zu werden, wobei das radiale Profil des Keils (24) das radiale Profil der Stützfläche (16) des Elements (12) definiert.

2. Element (12) nach dem vorhergehenden Anspruch, wobei sich die Grundfläche (55) axial erstreckt und jede Beaufschlagungsfläche (47) der Teilstützfläche (18) gegenüberliegt und der Grundfläche (55) zugewandt ist, wobei der Abstand zwischen der Grundfläche (55) und der Beaufschlagungsfläche (47) jedes beweglichen Gliedes (20) in Abhängigkeit von der radialen Position des beweglichen Gliedes (20) bezüglich des Trägers (14) variabel ist.

3. Element (12) nach einem der vorhergehenden Ansprüche, wobei der Träger (14) Mittel (26) zur axialen Führung des Keils (24) aufweist, welche eine Gleitführung (28) aufweisen, in welcher der ein Gleitstück (30) bildende Keil (24) gleitend angebracht werden kann.

4. Element (12) nach einem der vorhergehenden Ansprüche, welches Mittel (32) zur radialen Führung jedes beweglichen Gliedes (20) bezüglich des Trägers (14) aufweist.

5. Element (12) nach einem der vorhergehenden Ansprüche, welches Mittel (40) zur Begrenzung des radialen Weges jedes beweglichen Gliedes (20) aufweist.

6. Element (12) nach einem der vorhergehenden Ansprüche, welches Mittel (42) zur elastischen Rückholung jedes beweglichen Gliedes (20) aufweist.

7. Vorrichtung (10) für die Formgebung eines Reifenrohlings, wobei die Vorrichtung (10) im Wesentlichen rotationssymmetrisch um eine Hauptachse (X) ist, **dadurch gekennzeichnet, dass** sie mehrere Elemente (12) nach einem der vorhergehenden Ansprüche aufweist, die in Umfangsrichtung um die Hauptachse (X) verteilt sind.

## Claims

1. Element (12) for shaping a circumferential portion of a raw tyre blank that substantially exhibits symmetry of revolution about a main axis (X), comprising a bearing surface (16) for bearing radially against a circumferential portion of a radially internal surface of the blank, the element (12) being designed in such a way that the radial profile of the bearing surface (16) is modifiable, **characterized in that** the element comprises
- a support (14) and several movable members (20) that can move radially with respect to the support (14) independently of one another and which are axially juxtaposed, each movable member (20) having a partial bearing surface (18), the full set of partial bearing surfaces (18) forming the bearing surface (16) of the element (12), and
- positioning means (22) for radially positioning the members (20) with respect to the support (14) comprising a packing piece (24) intended to be inserted between a base surface (55) of the support (14) and actuating surfaces (47) of the movable members (20), the radial profile of the packing piece (24) defining the radial profile of the bearing surface (16) of the element (12).

2. Element (12) according to the preceding claim, in which the base surface (55) extends axially and each actuating surface (47) is on the opposite side to the partial bearing surface (18) and is facing the base surface (55), the distance between the base surface (55) and the actuating surface (47) of each movable member (20) being variable as a function of the radial position of the movable member (20) with respect to the support (14).

3. Element (12) according to either one of the preceding claims, in which the support (14) comprises means (26) of axially guiding the packing piece (24) comprising a female slide (28) in which the packing piece (24) that forms a male slide (30) can be slidably mounted.

4. Element (12) according to any one of the preceding claims, comprising means (32) of radially guiding each movable member (20) with respect to the support (14).

5. Element (12) according to any one of the preceding claims, comprising means (40) of limiting the radial travel of each movable member (20).

6. Element (12) according to any one of the preceding claims, comprising means (42) of elastically returning each movable member (20).

7. Device (10) for shaping a raw tyre blank, the device (10) substantially exhibiting symmetry of revolution about a main axis (X), **characterized in that** it comprises several elements (12) according to any one of the preceding claims distributed circumferentially about the main axis (X).
